Europäisches Patentamt

European Patent Office

Office européen des brevets

(11) Publication number: **0 153 832**
**A2**

# EUROPEAN PATENT APPLICATION

(21) Application number: **85300956.1**

(22) Date of filing: **13.02.85**

(51) Int. Cl.⁴: **B 60 B 33/06**

(30) Priority: **13.02.84 GB 8403737**

(43) Date of publication of application:
**04.09.85 Bulletin 85/36**

(84) Designated Contracting States:
**DE FR GB IT NL SE**

(71) Applicant: Keil, Frederick John
4 Deynecourt Gardens Wanstead
London E.11(GB)

(72) Inventor: Keil, Frederick John
4 Deynecourt Gardens Wanstead
London E.11(GB)

(74) Representative: Brunner, Michael John et al,
GILL JENNINGS & EVERY 53-64 Chancery Lane
London WC2A 1HN(GB)

(54) Retractable castor unit.

(57) A retractable receptacle unit for a castor (29) having a stem (30) guided axially in the receptacle unit in use, has first (10) and second (23) members having cam surfaces (11a, 11b, 24a), fixedly mounted. A third member (19) in the form of a pair of lugs is positioned for movement with the stem (30). The first (10), second (23) and third (19) members cooperate to control the position of the third member (19) relative to the first (10) and second (23) members and thus control the position of the stem (30) in the receptacle unit so as to enable the stem (30) to move between an extended engaged position in which the castor (29) is held axially extended away from the receptacle unit and a retracted position in which the castor (29) is axially retracted towards the receptacle unit.

Fig.1.

KEIL, Frederick John.                      90/2239/02

## RETRACTABLE CASTOR UNIT

The present invention relates to castor units and more particularly to a retractable castor unit which enables a castor to move automatically between an extended position in which the castor can be engaged with a floor for movement of a piece of furniture to which the castor is attached and a retracted position in which the castor is non-operative, that is to say is not in load-bearing engagement with the floor.

Whilst castors are extremely useful, particularly on heavy pieces of furniture, to allow furniture to be moved easily from one place to another simply by pushing the article across the surface of the floor, they also suffer from a number of disadvantages. Firstly, most castors have a small load-bearing area of engagement with the floor and therefore, particularly with heavy articles of furniture, damage to the floor can result not only when the furniture is being moved, but also if the furniture remains in a single place over a long period of time. Additionally, furniture fitted with castors can often move when it is undesirable for movement to take place. A further disadvantage is that furniture fitted with castors tends to have a frog-legged appearance which may destroy the overall effect of the design.

To overcome some of these problems retractable castors have been proposed, see for example GB-A-619906, in which the castor can be moved between a retracted position in which it is out of engagement with the floor and an extended position in which it is in load-bearing operative engagement with the floor. However, these prior art designs have involved the use of bulky levers or locking bolts and the like. An alternative form of castor, for use with generally lighter pieces of furniture, is one which is spring-mounted within the base of the piece of furniture so that in normal use, when the furniture is unloaded, it can be wheeled on the castors from one position to another, but when it is loaded, the springs are compressed and the castors are retracted into the base of the furniture which then itself rests on the floor to provide a secure footing. Such a castor is known particularly for use on library ladders and the like.

As the latter type of castor is generally only usable on light pieces of furniture and not on armchairs, display stands or the like, and as the former type of retractable castor tends to be bulky and visually unattractive, there is a need for a retractable castor in which the visual impact of the castor is reduced at least when the article of furniture is in its desired static position.

According to the present invention therefore a retractable receptacle unit for a castor having a stem guided axially in the receptacle in use, is characterized in that the receptacle unit has first and second members or a third member fixedly mounted in the receptacle unit, and a third member or first and second members respectively for movement with the stem, the first, second and third members having means for controlling the position of the third member relative to the first and second members and thus of the stem in the receptacle unit so as to enable the stem to move between an extended engaged position in which the castor is held axially extended away from the receptacle unit and a retracted position in which the castor is axially retracted towards the receptacle unit.

The said means may include cam surfaces and slits on the first and second members, and one or more lugs comprising or protruding from the third member, the or each lug engaging with a respective slit when the stem is in the retracted position, and cooperating with the cam surfaces to effect the transition between the extended and retracted positions. Alternatively, the said means may include cam surfaces and slits on the third member, and one or more lugs comprising or protruding from the first and second members, the or each lug engaging with a respective slit when the stem is in the retracted position, and cooperating with the cam surfaces to effect the transition between the extended and retracted positions.

It will be appreciated that the first and second members can be mounted on the stem and the third member in the receptacle or vice versa.

Preferably the or each lug nests in the bottom of its respective slit when the stem is in the retracted position.

The receptacle may comprise a fourth member on which the first and second members or the third member are mounted and in which the stem of the castor is mounted in use. Such a receptacle may then be fitted to existing furniture for use with the existing castors.

Preferably, the third member or the first and second members respectively are caused to rotate in order to enable the stem to move between the extended and retracted positions, by cooperation of the or each lug with respective ones of the cam surfaces. The stem of the castor may itself be rotatable within the third member or may be rotatable with it.

Preferably, the receptacle is constructed so as to bias the third member and stem out of their extended or retracted positions, these positions being maintained, in operation, by the reaction force acting as a result of the weight of the furniture on the floor.

Two examples of retractable receptacle units constructed in accordance with the present invention will now be described with reference to the accompanying drawings in which:-

Figure 1 is a part-exploded view of the parts, some of which are in section, of a first receptacle unit and an existing castor;

Figure 2 is an end view of the assembled receptacle body and first member of Figure 1;

Figure 3 is a part-exploded view of the parts, some of which are in section, of a second receptacle unit;

Figure 4 is an end view of the assembled receptacle body and first member of Figure 3;

Figures 5a to 5d are developed views of a series of relative positions of the guide surfaces of the first and second members and the lugs of the third member with which they co-operate;

Figure 6 is a developed view similar to that of Figures 5a to 5d, but showing the path traced out by a lug as the associated castor moves from an extended to a retracted and then to an extended position; and,

Figure 7 is a side view of an alternative third example of the receptacle body.

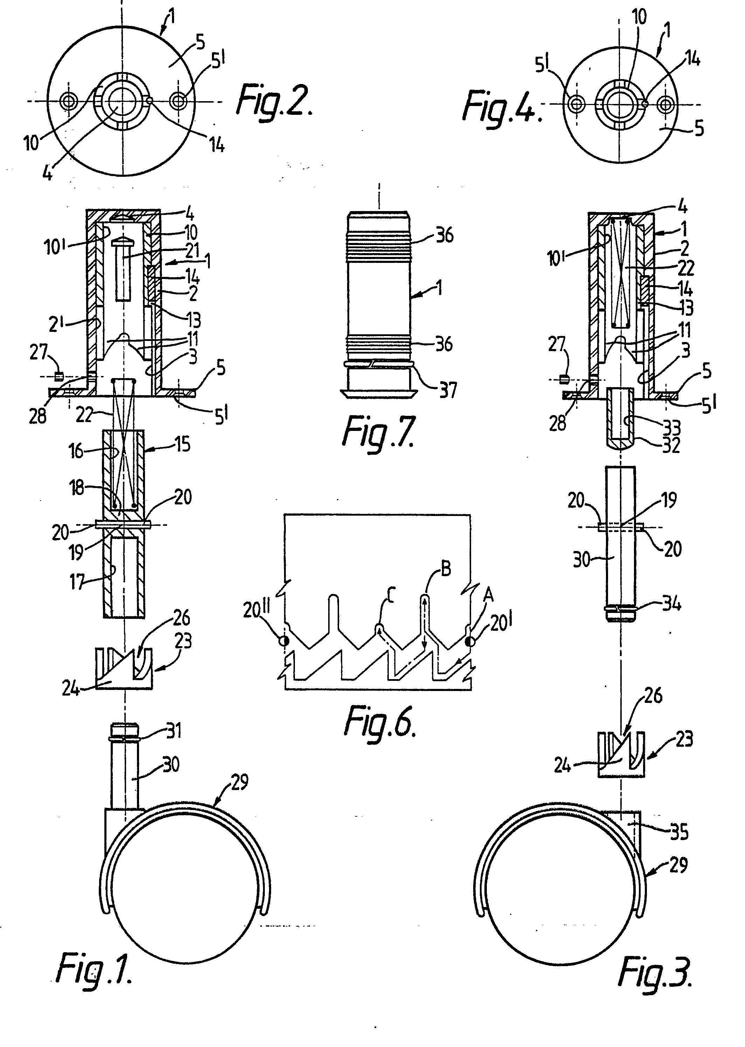

The receptacle of Figures 1 and 2 comprises a body 1 which has a hollow cylindrical main part 2, having an internal bore 2', and which is closed at one end and has an external mounting flange 5 at the open end. The flange 5 has diametrically-opposed holes 5' for use in retaining the receptacle in a suitable aperture in a piece of furniture. The bore 2' of the cylindrical main part 2 has an axial keyway 3 running from the open end along part of its length. Also, in the centre of the inner end face, there is a circular countersunk recess 4.

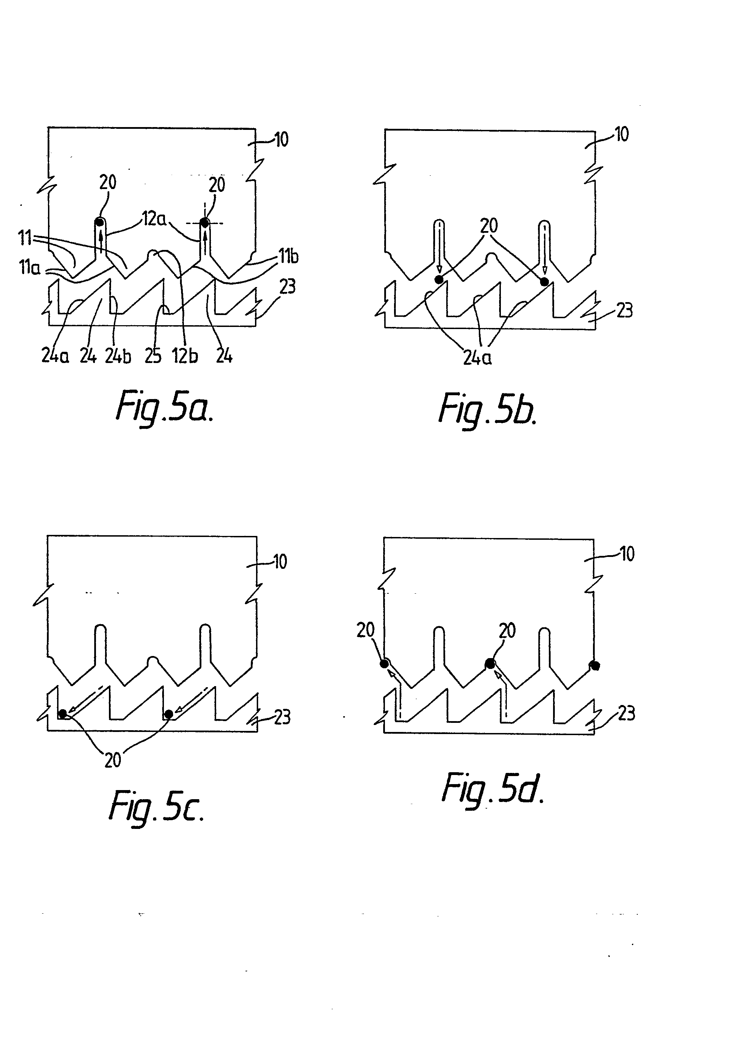

A first part-cylindrical member 10 is mounted within the body 1 at the closed end of the bore 2' and is provided with a bore 10' along its axis. The rim of the member 10 which faces towards the open end of the body 1 has a saw-tooth profile (see Figure 5a) comprising four V-shaped projections 11, each having a pair of inclined surfaces 11a,11b separated by, alternately, a deep slit 12a and a shallow slit or depression 12b. The first member 10 has an axial keyway 13 on its outer surface, so that, with keyway 3 aligned with keyway 13, a key 14 may be inserted to prevent the first member 10 from rotating relative to the body 1.

A cylindrical spool member 15 has a pair of blind bores 16,17, one extending from each end of the member 15 and has a high tensile steel pin 19 fixed on a diameter through the web 18 separating the two blind bores 16,17. The pin 19, at both ends, stands proud of the outer surface of the member to form a pair of lugs 20, these lugs being engageable with the saw tooth profile of the first member when the spool member has been slid into the bore 10', and the two members being a close sliding fit. Prior to this assembly, a coil spring 22 is inserted in the bore 16 and then the stem of a pin 21 is slid up the middle of the spring 22, so that, when assembled with the head of the pin 21 nesting in the recess 4, the spring 22 will bias the spool member 15 towards the open end of the body 1, and the pin 21 and hole 16 will prevent buckling of the spring 22 when it is compressed to provide the bias.

A second part-cylindrical member 23 has a central bore 26 and a rim having a regular saw-tooth profile comprising (see Figure 5a) four projections 24, each having an inclined surface 24a and an axial side wall 24b, and four connecting surfaces 25, each of which is situated between a respective pair of the projections 24. The inner and outer diameters of the second member 23 are such that, upon being pressed into the annular slot defined by the body 1 and the assembled spool member 15, the second member 23 is a tight friction fit in the body and the spool member 15 is a sliding fit in the member 23. The member 23 may, for security, additionally be prevented from rotating relative to the body 1 by having a keyway (not shown) on its outer surface which, having been aligned with the keyway 3, is locked by the sliding insertion of a key (not shown). This locking also prevents relative rotation between the first and second members. A grub screw 27, which may screw-threadably engage with a through hole 28 in the wall of the cylindrical main part of the body 1, may also be provided to help to prevent movement of the second member 23.

A conventional castor 29 has a stem 30 which may be inserted into the bore 17 in the third member 15 and frictionally retained therein by means of a split ring 31 positioned partially in a circumferential groove on the stem 30. The stem 30 may be withdrawn from the bore 17 by a sufficiently strong axial force, thus enabling the castor 29 to be replaced if, for example, it is damaged or worn out. The stem 30 has a diameter similar to that of the bore 17 to prevent relative wobbling.

The receptacle, shown in Figures 3 and 4, has parts in common with the receptacle of Figures 1 and 2. These common parts have been given common reference numerals. The second example of the invention differs in the following respects.

The stem 30 of the castor 29 fits into a hole 35 in the castor 29, and is frictionally retained therein by a split ring 34 positioned partially in a circumferential groove on the stem 30. The end of the stem 30 remote from the castor 29 has a bore (not shown) for receiving a cup-shaped spring cover 32. The spring cover 32 has a bore 33 for surrounding and supporting one end of the spring 22 so as to prevent the spring 22 from buckling under compression. The other end of the spring nests directly in the recess 4.

The pin 19 is fixed on a diameter through the stem 30, and, as in the previous example, both ends of the pin 19 stand proud of the surface to form a pair of lugs 20.

In both examples the castor, when in an extended position, can support the weight of the furniture. The furniture can support itself, e.g. on its frame or legs, when the castor is in a retracted position in which it rests on the floor without bearing the weight of the furniture.

Figures 5a to 5d illustrate the method of operation, the method applying to both the previously described examples. For the furniture to be able to support itself, the castor 29 must be able to retract far enough into the aperture in which the receptacle is mounted.

Assuming that the furniture is supporting itself, i.e. the lugs are as shown in Figure 5a, then, when the furniture is lifted up, the castor will drop, under the influence of gravity and the compressed spring 22, causing the lugs 20 to move to the position shown in Figure 5b and they will then run along their respective inclined surfaces 24a until they come to rest on the horizontal surfaces 25 (see Figure 5c). The rotation produced by moving from the position shown in Figure 5b to the position shown in Figure 5c ensures that, when the piece of furniture is lowered back onto the floor, the lugs 20 will slide up the walls 24b and then along the inclined surfaces 11a so as to nest in the shallow slits 12b (see Figure 5d). The castor will now again be in load-bearing engagement with the floor, with the pin 19 supporting the weight of the furniture.

Figure 6 shows the path traced out by a lug 20' as it goes through a complete cycle from the castor supporting the weight of the furniture (i.e. lug 20' at A), the furniture being lifted then lowered so that the castor is retracted and the furniture is supporting itself (i.e. lug 20' at B), and the furniture being again lifted then lowered so that the castor advances to support the weight of the furniture (i.e. lug 20' at C). The corresponding path of the other lug 20" has not been shown.

The two previously described examples of the invention (i.e. as shown in Figures 1 to 4) have had a body 1 which is fixed to the furniture by making use of the holes 5' in the flange 5. Figure 7 shows an alternative body 1, which, whilst being identical internally to the arrangements shown in Figures 1 or 3, dispenses with the need for the flange 5 and its holes 5'. The body 1 of Figure 7 has circumferential serrations 36 angled to enable insertion into a hole but to prevent withdrawal by being able to dig into the furniture material in a barb-like manner. The body 1 also has a split ring 37, positioned partially in a circumferential groove, which provides frictional resistance to axial movement of the body by radial compression. The body 1 of Figure 7 would be particularly suited to being used in the factory production of furniture where the extra time required to put screws or nails through the holes 5' of the bodies of Figures 1 and 3 would result in an increase in the cost of manufacture of the piece of furniture.

In both of the above examples the cam surfaces are formed on the first and second members which in turn are fixedly mounted in the receptacle, and the lugs are formed on a spool member or on the stem. However, it will readily be appreciated that the relative positions of the first and second members and the third member can be interchanged so that the third member is fixed relative to the receptacle and the first and second members move with the castor stem. Furthermore, the relative positions of the lugs and cam surfaces may be interchanged so that the lugs comprise the first and second members and the third member has cam surfaces on its two ends facing the lugs of the first and second members which are spaced on either side of the third member. These alternatives will be readily understandable and can be constructed without extending beyond the scope of the present invention.

CLAIMS

1. A retractable receptacle unit for a castor (29) having a stem (30) guided axially in the receptacle unit in use, characterized in that the receptacle unit has first (10) and second (23) members or a third member (19) fixedly mounted in the receptacle unit, and a third member (19) or first (10) and second (23) members respectively for movement with the stem (30), the first (10), second (23) and third (19) members having means for controlling the position of the third member (19) relative to the first (10) and second (23) members and thus of the stem (30) in the receptacle unit so as to enable the stem (30) to move between an extended engaged position in which the castor (29) is held axially extended away from the receptacle unit and a retracted position in which the castor (29) is axially retracted towards the receptacle unit.

2. A receptacle unit according to claim 1, where the said means includes cam surfaces (11a,11b,24a) and slits (12a) on the first (10) and second (23) members, and one or more lugs (20) comprising or protruding from the third member (19), the or each lug (20) engaging with a respective slit (12a) when the stem (30) is in the retracted position, and cooperating with the cam surfaces (11a,11b,24a) to effect the transition between the extended and retracted positions.

3. A receptacle unit according to claim 1, where the said means includes cam surfaces and slits on the third member, and one or more lugs comprising or protruding from the first and second members, the or each lug engaging with a respective slit when the stem is in the retracted position, and cooperating with the cam surfaces to effect the transition between the extended and retracted positions.

4. A receptacle unit according to claim 2 or claim 3, wherein the or each lug (20) nests in the bottom of its respective slit (12a) when the stem (30) is in the retracted position.

5. A receptacle unit according to any of claims 1 to 4, further comprising a fourth member (15) on which the first (10) and second (23) members or the third (19) member are mounted and in which the stem (30) of the castor is mounted in use.

6. A receptacle unit according to claim 5, wherein the stem (30) is frictionally retained within a bore (17) in the fourth member (15).

7. A receptacle unit according to claim 2 or any of claims 3 to 6 when dependent on at least claim 2, wherein the third member (19) or the first (10) and second (23) members respectively are caused to rotate in order to enable the stem (30) to move between the extended and retracted positions, by cooperation of the or each lug (20) with respective ones of the cam surfaces (11a,11b,24a).

8. A receptacle unit according to any of claims 1 to 7, wherein the receptacle includes a spring (22) for biasing the castor towards its extended position.

1/2

0153832

Fig.2.

Fig.4.

Fig.7.

Fig.6.

Fig.1.

Fig.3.

Fig.5a.

Fig.5b.

Fig.5c.

Fig.5d.